Europäisches Patentamt

(19) European Patent Office

Office européen des brevets

(11) Publication number: **0 003 391**
**B1**

# EUROPEAN PATENT SPECIFICATION

(45) Date of publication of patent specification: **25.05.83**

(51) Int. Cl.³: **C 03 B 23/025**

(21) Application number: **79300012.6**

(22) Date of filing: **04.01.79**

(54) Apparatus for bending and tempering glass.

(30) Priority: **25.01.78 US 872201**

(43) Date of publication of application:
**08.08.79 Bulletin 79/16**

(45) Publication of the grant of the patent:
**25.05.83 Bulletin 83/21**

(84) Designated Contracting States:
**BE CH DE FR GB IT LU NL SE**

(56) References cited:
**DE - A - 2 461 974**
**US - A - 3 455 672**
**US - A - 3 607 187**
**US - A - 3 684 473**
**US - A - 3 778 244**

(73) Proprietor: **McMaster, Harold A.**
**420 Water Street**
**Woodville Ohio (US)**

(73) Proprietor: **Nitschke, Norman Carl**
**9102 Buck Road**
**Perrysburg Ohio 43551 (US)**

(73) Proprietor: **Nitschke, John Stephen**
**324 East Second**
**Perrysburg Ohio 43551 (US)**

(72) Inventor: **McMaster, Harold A.**
**420 Water Street**
**Woodville Ohio (US)**
Inventor: **Nitschke, Norman Carl**
**9102 Buck Road**
**Perrysburg Ohio 43551 (US)**
Inventor: **Nitschke, John Stephen**
**324 East Second**
**Perrysburg Ohio 43551 (US)**

(74) Representative: **Wisher, Michael Frederick et al,**
**Urquhart-Dykes & Lord 47 Marylebone Lane**
**London W1M 6DL (GB)**

## Apparatus for bending and tempering glass

Technical Field

This invention relates to apparatus for bending and tempering sheet glass.

Background Art

Bent and tempered glass is used extensively for vehicle side and rear windows to provide good resistance to breakage as well as an aesthetically appealing shape that complements the design of the vehicle. In order to perform the bending and tempering, sheet glass must be heated to its deformation point of about 650° to 700°C and then bent to the required shape before being rapidly cooled by an air spray in order to temper the glass. Tempering greatly increases the mechanical strength of the glass and its resistance to breakage as well as causing the glass to break into small relatively dull pieces when broken instead of into large sharp slivers as is the case with untempered glass.

One manner in which glass is bent and tempered is with press benders having shaped surfaces between which heated glass is clamped to shape it prior to being air cooled by a quench unit to provide tempering. United States Patents 3,454,389; 3,476,542; 3,488,178; 3,600,150; and 3,951,634 disclose press bending and tempering apparatus for sheet glass.

Sheet glass is also bent and tempered by heating of planar glass sheets while supported on bending molds including movable sections. Prior to softening of the glass during heating, the sections of the mold are oriented to accommodate for the glass sheet planarity. Upon softening of the glass sheet as it is heated, the mold sections move relative to each other under the force of gravity acting on the sheet and the mold sections in order to provide bending of the sheet prior to rapid cooling thereof which provides its tempering. Thin glass, i.e. on the order of 3 mm, cannot be bent by this apparatus since it does not have sufficient weight to actuate the pivoting of the mold sections until the glass becomes so soft that it overbends. United States Patents 3,269,822; 3,278,287; 3,307,930; and 3,365,285 disclose this type of bending and tempering apparatus.

Heating of glass sheets prior to bending and tempering thereof has also been performed on fluid support beds as the glass is conveyed through a furnace. Normally the support bed is inclined slightly with respect to the horizontal so that gravity engages an edge of the glass with a movable frame that provides the impetus for glass movement along the bed. There is no contact between the bed and the oppositely facing surfaces of the glass during the conveyance as the glass is heated. This lack of contact prevents marring and scratching of the soft surfaces of the glass as the glass reaches its deformation temperature. However, there normally is mechanical contact with the glass during the bending after the heating in preparation for a cooling quench that tempers the glass in its bent condition. United States Patents 3,497,340; 3,607,187; and 3,607,200 disclose glass bending and tempering apparatus of this type with a fluid support bed.

Vacuum forming of heated glass sheets is disclosed by United States Patent 3,778,244 wherein the sheet glass is first heated during conveyance along a roller hearth conveyor. After heating, a lifter with a curved downwardly facing surface has a vacuum applied thereto about the surface to shape the glass. After shaping against the curved surface of the lifter, the vacuum is terminated to drop the glass onto a mold for conveyance to a waiting operator who removes the glass from the mold. Further vacuum forming of the glass to a curved surface of the mold is also disclosed.

Other bending and/or tempering apparatus for glass sheets is disclosed by United States Patents 2,223,124; 2,348,887; 2,646,647; 2,085,520; 3,684,473; and by German Offenlegungsschrift 2,461,974.

Disclosure of the Invention

An object of the present invention is to provide improved apparatus capable of bending and tempering thin glass sheets, i.e. on the order of 3 mm thick, to an accurately controlled shape despite the supple nature of such sheets when heated to a sufficiently high temperature for bending and subsequent tempering.

In carrying out the above object, the apparatus includes a heating chamber for providing a heated ambient for heating glass sheets to a sufficiently high temperature to permit tempering thereof; a conveyor for conveying glass sheets generally horizontally through the heating chamber; a holder within the heated ambient and positioned at an elevation above the conveyor and having a downwardly facing surface of a predetermined shape at which a differential gas pressure is applied to a heated sheet of glass received from the conveyor so as to support the glass sheet at an elevation above the conveyor in preparation for bending; a cooling unit located outside the heated ambient for cooling bent glass sheets; a mold with a curved shape for receiving a heated glass sheet from the holder at a position thereunder; and an actuator for moving the mold between the holder and the cooling unit, the invention being characterized in that the mold comprises a ring having an open center, that the ring has at least a substantial portion with a downwardly extending curvature greater than the predetermined shape of the holder surface, that the holder receives the heated glass sheet at tempering temperature and thereafter releases the glass sheet for substantial bending on the ring solely due to inertial and gravitational forces, that the cooling unit comprises a quench unit for rapidly cooling glass to provide tempering thereof, and that the actuator moves the ring from the holder to the quench unit for tempering after the glass sheet sags to substantially its final shape within the heated ambient.

The holder may be located above the conveyor within the heating chamber that provides the heated ambient and the holder surface may include spaced openings at which a vacuum is drawn in order to apply the differential pressure to a heated glass sheet supported by the holder. The holder may also have a porous construction at the surface thereof so as to prevent marring or scratching of heated sheets of glass upon engagement thereof with the holder and so as to also distribute the vacuum between the spaced openings. A surface cover of the holder may be made of ceramic fibers and have the porous construction which prevents marring or scratching of the heated glass sheets and which also distributes the vacuum between the spaced openings.

In one embodiment, a support raises and lowers the vacuum holder relative to the conveyor so as to facilitate lifting of the heated glass sheets off the conveyor in preparation for the bending. In another embodiment, the conveyor includes horizontally extending rolls and auxiliary lifters movable vertically between the rolls to raise a heated sheet of glass toward the vacuum holder and thereby facilitate lifting of the glass sheet in preparation for the bending. The auxiliary lifters of the latter embodiment may have T shapes including upper crossbars that engage the glass and lower stems that extend downwardly from the crossbars between the conveyor rolls. Each lifter crossbar may also include a woven ceramic cloth cover that engages a heated sheet of glass as the lifter moves upwardly to pick the glass off the conveyor rolls.

The apparatus may include a vacuum holder control for providing a greater initial vacuum within the openings to facilitate the initial support of a glass sheet and for subsequently providing a reduced vacuum to support the sheet of glass without deforming the sheet at the openings.

A quench unit of the apparatus may include a lower blasthead for blowing gas upwardly to lift the bent sheet upwardly off the ring in order to permit movement of the ring from below the lifted sheet back into the heating chamber.

In one embodiment, the surface of the holder has a planar shape so as to be capable of supporting a glass sheet of a selected size that is to bend to any desired shape on the ring. Another embodiment includes a holder whose surface has a curved shape so as to allow prebending of the glass sheet on the holder prior to the bending on the ring.

The furnace disclosed for heating the glass sheets includes a housing defining the heating chamber thereof, and a roller hearth conveyor for conveying the glass sheets through the heating chamber. An upwardly opening lower housing portion and a fixed roof of the furnace housing cooperate with vertically movable side doors to define the heating chamber. Lower ends of the doors cooperate with the upper ends of the side walls on the lower housing portion to define side slots through which ends of elongated conveyor rolls project outwardly from the heating chamber. Continuous drive loops in the form of either chains or solid steel belts support the ends of the conveyor rolls and are slidably driven over external support surfaces extending alongside the slots to support and frictionally drive the rolls. Upward movement of the side doors permits access to the furnace heating chamber for maintenance and repairs.

In an embodiment, sensing of the glass position along the conveyor and the operation of a lateral locator accurately position the glass on the holder surface without requiring the conveyor to be stopped prior to the holder operation. One locator disclosed operates during the conveyance upstream from the holder and includes one sensor upstream from the locator and another sensor between the locator and the holder for sensing the longitudinal position of the glass. Both sensors are coupled to the conveyor drive mechanism and the vacuum holder to coordinate their operation. Another lateral locator disclosed operates after the glass has been lifted by the auxiliary lifters but before it has been initially supported on the holder. A single sensor upstream from this locator is coupled with the conveyor drive mechanism and the auxiliary lifters as well as the vacuum holder to coordinate their operation.

The objects, features and advantages of the present invention are readily apparent from the following description of the best mode for carrying out the invention taken in connection with the accompanying drawings.

Brief Description of the Drawings

FIGURE 1 is a schematic side elevation view showing one embodiment of glass bending and tempering apparatus constructed in accordance with the present invention;

FIGURE 2 is a top plan view of the apparatus taken along line 2—2 of FIGURE 1;

FIGURE 3 is a schematic view of a furnace and a quench unit of the apparatus taken along line 3—3 of FIGURE 1;

FIGURE 4 is a top plan view taken along line 4—4 of FIGURE 3 showing a carrier mold in the form of a ring on which heated sheet glass is bent under gravity;

FIGURE 5 is a side view of the carrier ring taken along line 5—5 of FIGURE 4;

FIGURE 6 is an enlarged view of a portion of FIGURE 4 showing a helical spring that is wrapped about the carrier ring so as to engage the sheet glass with point contact;

FIGURE 7 is a bottom plan view taken along line 7—7 of FIGURE 8b showing a vacuum holder of the apparatus positioned within the furnace heating chamber;

FIGURES 8a and 8b are taken in the same direction as FIGURE 3 and together show a cross-sectional view of the furnace and quench unit of the apparatus;

FIGURE 9 is a side elevation view taken along line 9—9 of FIGURE 2 showing both the quench unit and portions of the furnace;

FIGURE 10 is a top plan view of the quench unit taken along line 10—10 of FIGURES 8a and 8b;

FIGURE 11 is a side elevation view of auxiliary lifters of the apparatus taken along line 11—11 of FIGURE 8b;

FIGURE 12 is a top plan schematic view of the apparatus;

FIGURES 13 and 14 are schematic views of other embodiments of apparatus according to the present invention;

FIGURE 15 is a sectional view taken along line 15—15 of FIGURE 14 showing a conveyor roll and lifter construction of the apparatus; and

FIGURES 16 and 17 are schematic elevation views of another embodiment of the vacuum holder.

Best Mode for Carrying Out the Invention

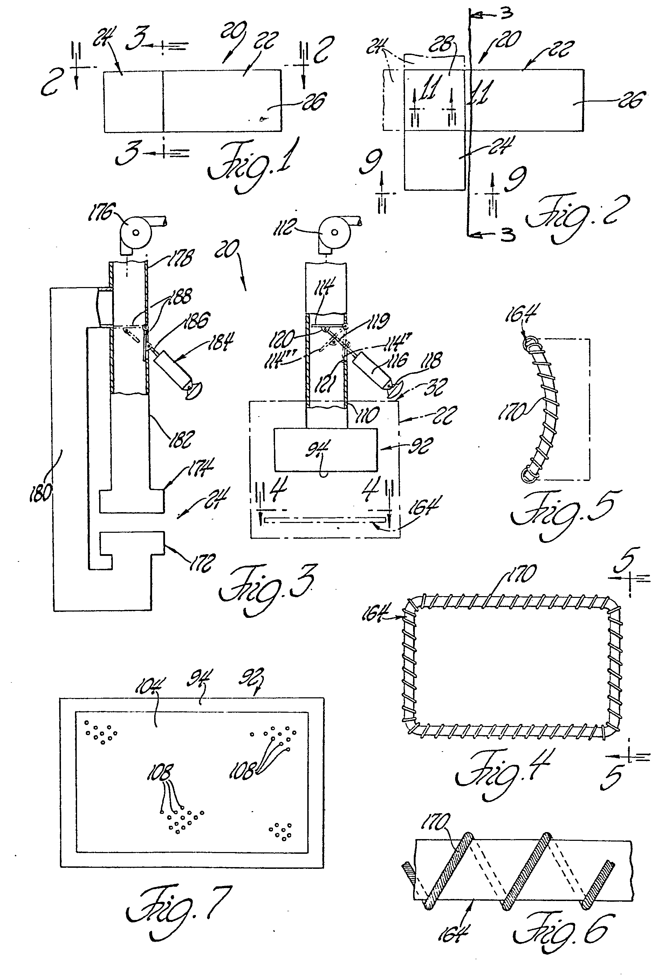

Referring to FIGURES 1 and 2 of the drawings, one embodiment of the glass bending and tempering apparatus constructed according to the present invention is indicated generally by 20 and includes a furnace 22 as well as a quench unit 24. One end 26 of the furnace 22 receives discrete sheets of glass to be bent and tempered while the other end 28 of the furnace has provisions for bending the glass once it is heated in a manner that is hereinafter described. Quench unit 24 is shown by solid line representation positioned laterally adjacent one side of the furnace end 28 and receives the heated and bent glass to provide tempering thereof in a manner that is likewise hereinafter described. It is also possible for the quench unit 24 to be positioned at the other side of the furnace end 28 or at its longitudinal end as shown by phantom line representation. Quench units can also be provided at any two or all three of these positions to receive heated and bent glass for tempering and thereby increase the system output. The quench unit 24 aligned with the longitudinal direction of the furnace can also be used to temper sheet glass that is not bent.

With reference to FIGURE 8b, the furnace 22 in which sheet glass is heated includes a housing composed of lower and upper portions 30 and 32, respectively. Lower housing portion 30 is made from refractory blocks 34 mounted on a framework of horizontal and vertical beams 36 defining an upwardly opening U shape. A bottom wall 38 of the lower housing portion 30 is made from a larger refractory block and includes T-shaped retainers 40 for securing heater elements 42. Side walls 44 of the lower housing portion 30 are defined by the refractory blocks 34 extending upwardly from the bottom wall 38 to support upper refractory end blocks 46. Upper housing portion 32 includes a fixed roof 47 and a pair of vertically movable side doors 48 that extend downwardly from the roof in a U shape to cooperate with the upwardly opening U shape of the lower housing portion in defining a heating chamber 50 that provides a heated ambient. Fixed roof 47 also has T-shaped retainers 40 and heater elements 42 secured by the retainers. A horizontal beam 52 is supported at its opposite ends by vertical beams 54 (only one shown in FIGURE 8a) and itself supports horizontal beams 56 that mount nut and bolt connectors 57 for securing the roof 47. A pulley system collectively indicated by 58 counterbalances the weight of each door 48 during movement thereof between its lower closed position shown by solid line representation and its upper open position shown by phantom line representation. Pulley system 58 includes a counterweight 60 (FIGURE 8a) associated with each side door 48 as well as a number of pulleys 62 over which cables 64 are trained so that the counterweight moves up and down with the door upon manual effort applied to the door independently of the other door. In the open positions of the side doors, the heating chamber 50 is accessible for maintenance and repair. In the lower closed positions, the side doors prevent the escape of heat from the heating chamber 50.

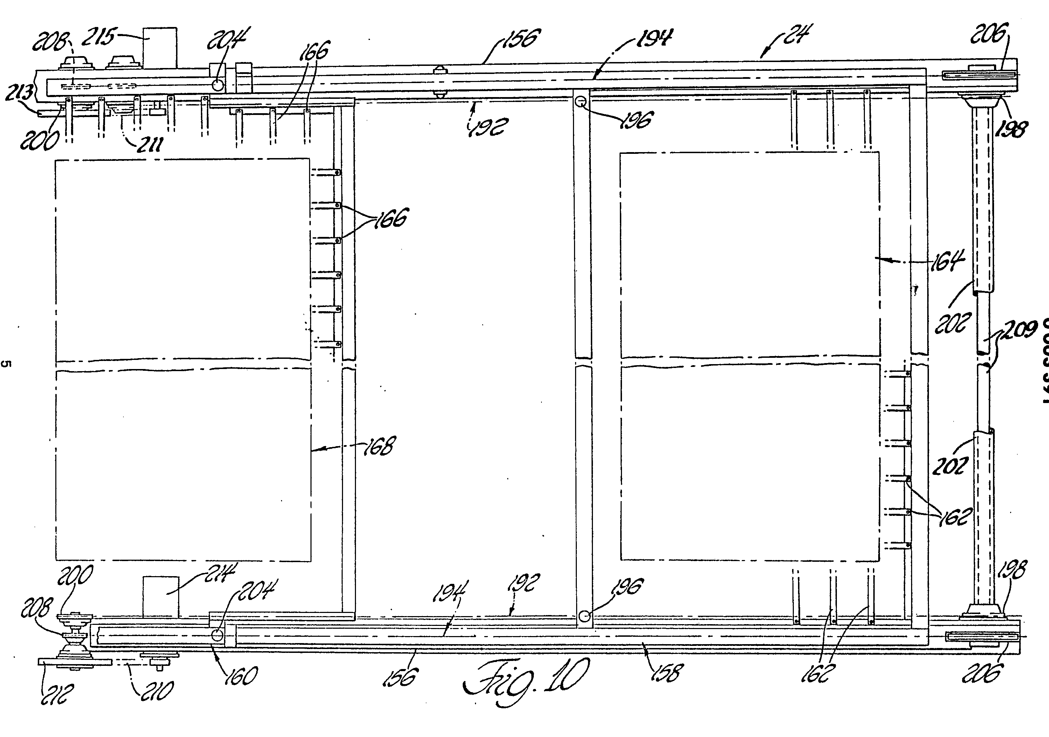

A conveyor of the apparatus is indicated collectively by reference numeral 66 in FIGURE 8b and includes a plurality of conveyor rolls 68 (see also FIGURE 9) of fused silica particles that are sinter bonded to each other. Ends of each conveyor roll 68 project outwardly through side slots 70 defined between the upper end blocks 46 of the lower housing portion and the lower ends 72 of the vertically movable side doors 48. Heat seals 73 on the blocks 46 and lower door ends 72 seal the slots 70 to prevent the loss of heat from the furnace to the environment and cooperatively define circular openings (not shown) through which the roll ends project. Continuous drive loops 74 in the form of chains or solid steel belts are slidably driven over upwardly facing support surfaces of members 76 that extend alongside the side slots 70 as best seen in FIGURE 9. Each roll end is positioned between upwardly extending projections 78 which have idler rollers 80 (FIGURE 8b) for preventing movement of the rolls along with the drive loops. Nut and bolt supports 82 mount the support surface members 76 on the horizontal beams 36 in a vertically adjustable manner to maintain planarity of the upper sides of all of the rolls 68. Each end of the horizontal beams 36 mounting the support surface members 76 rotatably mounts a pulley 84 (FIGURE 9) over which the associated drive loops 74 are trained. At one end of the conveyor, a cross shaft 85 (FIGURE 12) connects the pulleys 84 and a drive mechanism 86 drives these pulleys by a digital drive motor such as the electric stepper motor 88 which drives a chain 90 to pull the drive loops 74 over the support surfaces and thereby frictionally drive the adjacent roll ends. United States Patents 3,806,312; 3,934,970; 3,947,242; and 3,994,711 disclose this type of frictional roll drive mechanism and the entire disclosure thereof is hereby incorporated by reference.

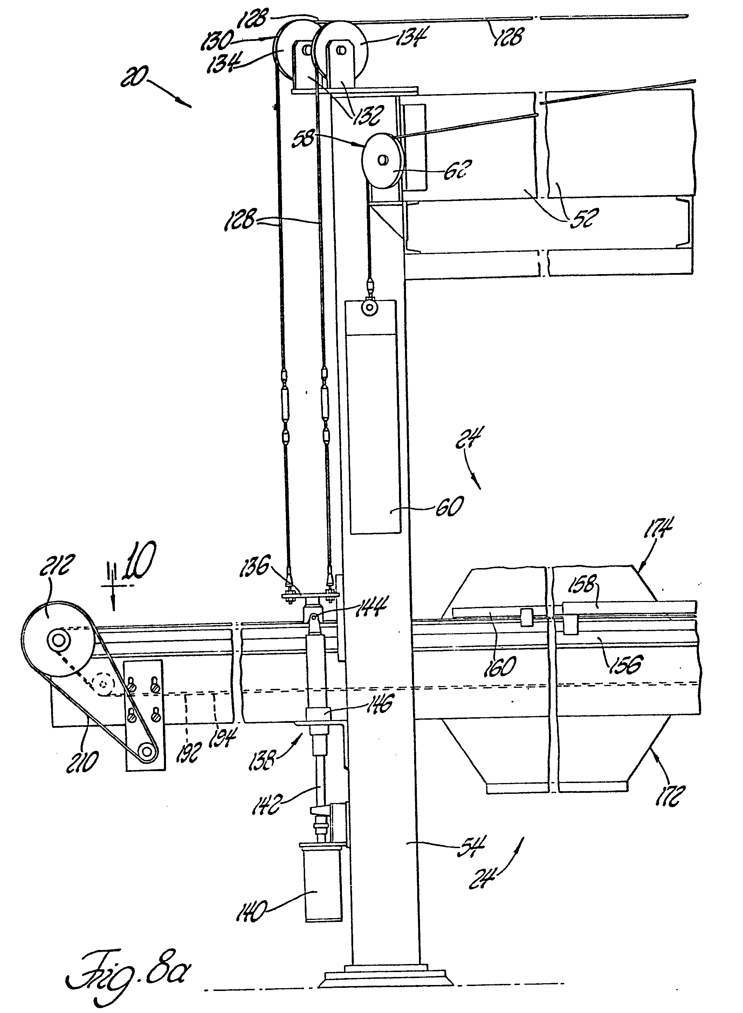

As seen in FIGURES 3, 7, and 8b, a vacuum holder 92 of the apparatus is positioned within the furnace heating chamber 50 at the end of the furnace adjacent the quench unit 24 and has a downwardly facing planar surface 94. Vacuum holder 92 is seen in FIGURE 8b as including an upper portion 96 of a downwardly opening U shape and a lower portion 98 of a relatively thick plate-like construction with edge projections 100 received within associated grooves in the upper portion 96 so as to be secured thereto and cooperate therewith in defining a cavity 102. A sheet-like cover 104 made of ceramic fibers, preferably silica, is compressed in a mat that has a porous construction. Such a silica fiber mat is commercially available and, as such, no further description thereof will be given. Any suitable high temperature adhesive is used to secure cover 104 on the downwardly facing planar surface 94 of the lower holder portion 98. Aligned openings or holes 106 and 108 through the holder portion 98 and the cover 104 communicate with the cavity 102. A vacuum drawn within the cavity 102 through a duct 110 by a vacuum blower 112 (FIGURE 3) is thereby drawn in the holes 106 and 108 in order to support a heated sheet of glass on the holder above the conveyor rolls 68 shown in FIGURE 8b. Cover 104 prevents marring or scratching of the soft glass surface as the glass sheet is engaged with the holder and, due to its porous construction, distributes the vacuum between the holes.

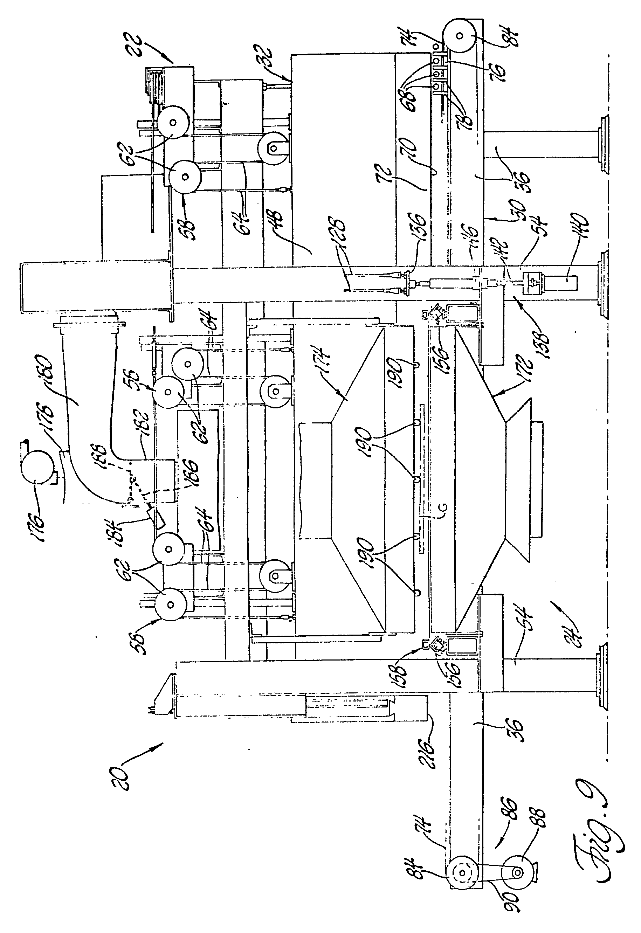

As the glass sheet is conveyed under the vacuum holder 92, a control or damper 114 of duct 110 is located in its solid line indicated position of FIGURE 3 by an actuator embodied as a cylinder 116. One end of cylinder 116 is pivotally fixed by a pin 118 to a stationary support while a piston rod 119 of the cylinder is secured by a pin 120 to the damper 114. No vacuum reaches the lower holder surface 94 with the damper in this position so that the glass is free to move under the holder. Once the glass is positioned under the holder, the cylinder 116 is supplied pressurized fluid to retract its rod 119 and to move the damper to its position shown by phantom line representation and indicated at 114'. An opening 121 to the environmental atmosphere through duct 110 is open with the damper in its solid line 114 position and closed by the damper in its phantom line position 114'. Vacuum is supplied to the lower holder surface 94 to pick up the sheet of glass with the damper in position 114'. Once the heated glass has been picked up by the vacuum holder, the cylinder 116 is supplied pressurized fluid to extend its connecting rod 119 and position the damper in the partially open position with respect to duct opening 121 as shown by phantom line representation and indicated by 114". Only a partial vacuum is drawn in the holder by the blower 112 with the damper in this partially opened position as a result of the atmospheric pressure that can enter the holder openings through the duct opening 121. This reduction in the drawn vacuum prevents the heated glass which is softened from being deformed in a dimple-like manner at the restricted holes or openings 108 that are spaced over the holder surface 94 as best seen in FIGURE 7. The vacuum which is drawn in the partially opened damper position 114" shown in FIGURE 3 is about 10% in centimeters of mercury of the vacuum which is drawn with the damper in its position indicated by 114' where the duct opening is closed. When the vacuum holder 92 is ready to release the lifted sheet of glass, as is hereinafter described, the cylinder 116 is supplied pressurized fluid to extend its piston rod 119 in order to locate the damper 114 in its solid line indicated position so that the vacuum drawn at the lower holder surface 94 is terminated in order to let the glass drop under the force of gravity.

Two modes of operation are provided for facilitating the vacuum holder pickup of sheet glass from the conveyor. As seen in FIGURE 8b, vacuum holder 92 is supported below the housing roof 47 by vertical rods 122 whose lower ends are threaded to receive nuts 123. Holes 124 in the roof 47 receive intermediate portions of the rods 122 to allow vertical movement thereof and upper ends of the rods are interconnected by a bar 126 and secured to cables 128 of a support or pulley system 130. Brackets 132 rotatably support pulleys 134 of this system on the horizontal beam 52 shown in both FIGURES 8a and 8b and the cables 128 are trained over these pulleys. As seen in FIGURE 8a, a common plate 136 of a cylinder actuator 138 is connected to the cables 128. Actuator 138 includes a cylinder 140 mounted on the vertical beam 54 and having a piston connecting rod 142 connected to the plate 136 by a pin 144. Guide 146 is mounted by a bracket on the vertical beam 54 and guides the rod 142 during upward and downward extending movement by the cylinder 140 upon being supplied a suitable pressurized fluid. Upward movement of the rod 142 allows the cables 128 to lower the holder 92 shown in FIGURE 8b toward the conveyor rolls 68 in order to facilitate pickup of the glass by a vacuum supplied in the manner previously discussed. After the pickup, the vacuum holder 92 is raised by downward movement of the rod 142 shown in FIGURE 8a so as to move the supported sheet of glass on the holder upwardly away from the conveyor.

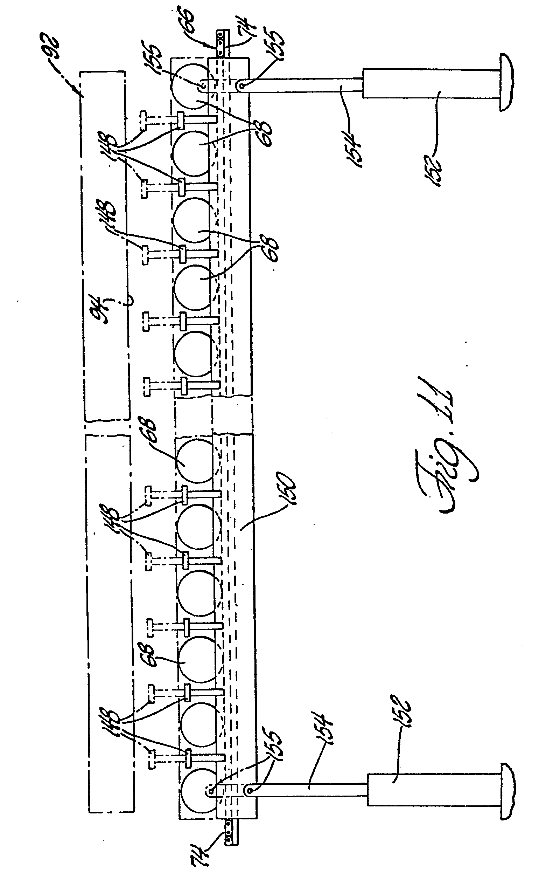

Auxiliary lifters 148 shown in FIGURE 11 are positioned between the conveyor rolls 68 and provide another mode of operation for facilitating the vacuum sheet glass pickup by the holder 92. Auxiliary lifters 148 have T-shaped cross sections and extend parallel to the conveyor rolls 68 and transversely with respect to the direction of sheet glass conveyance within the furnace. Opposite ends of the lifters 148 extend outwardly through the furnace housing side slots and are supported by elongated bars 150 at the sides of the furnace, these bars being notched to receive the lower ends of the lifters. A pair of cylinders 152 mounted on the vertical beams 36 as shown in FIGURE 8b have connecting rods 154 with upper ends connected to the bar 150 by pins 155 seen by reference back to FIGURE 11. Pressurized fluid is supplied to cylinders 152 in order to extend their rods 154 and raise the associated bar 150 as well as the auxiliary lifters 148 from the solid line indicated position of FIGURE 11 to its phantom line indicated position in order to lift the heated sheet of glass upwardly toward the vacuum holder 92. This upward movement of the glass positions it in proximity to the lower surface 94 of the vacuum holder so as to facilitate the glass pickup. After the vacuum holder is supporting the glass, cylinders 152 are supplied pressurized fluid to retract their piston connecting rods 154 so as to lower the auxiliary lifters 148 back between the conveyor rolls 68.

Rather than using a pair of cylinders for moving each bar 150, it is possible to use a single cylinder and interconnected linkages operated by the cylinder. Such a single cylinder linkage support of the auxiliary lifter bars 150 ensures coordinated movement of the bars.

As seen by combined reference to FIGURES 8a, 8b, and 10, spaced rails 156 of the quench unit 24 mount a pair of carriers 158 and 160 for movement perpendicular to the direction of glass conveyance within the furnace. Carrier 158 includes crossing straps 162 (FIGURE 10) on which a mold in the form of a ring 164 (hereinafter more fully described) is supported for movement between the furnace 22 and the quench unit 24. Carrier 160 likewise includes crossing straps 166 on which a delivery ring 168 is supported for movement between the quench unit and an operator who stands adjacent the apparatus at the left-hand side of FIGURE 8a. Carrier 158 extends into the furnace heating chamber in a cantilevered manner upon movement to the right to position ring 164 below the vacuum holder 92. In this position, the carrier extends through the housing side slot 70 at the adjacent side of the furnace. Movement of the carrier 158 to the left pulls the ring 164 out of the furnace through this side slot 70 and moves it into the quench unit 24.

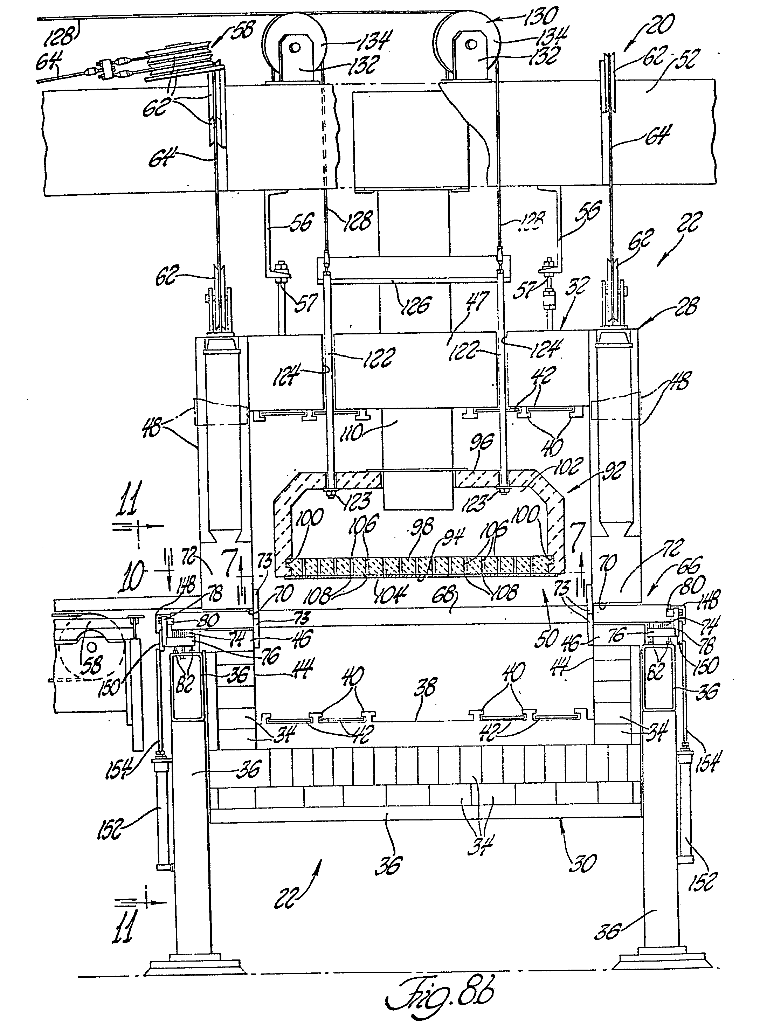

During use, carrier 158 shown in FIGURE 10 moves the mold ring 164 beneath the vacuum holder 92 with a heated sheet of glass supported on its lower planar surface 94. Vacuum supplied to the holder 92 is then terminated so that the heated glass drops down onto the mold ring 164 within the furnace heating chamber 50. A helical spring 170, see FIGURES 4—6, is wrapped about mold ring 164 in a helical shape and engages the periphery of the glass with point contact so as to minimize any cooling effect that the ring will have on the glass. Due to its heated condition, the planar sheet of glass begins to sag under the bias of gravity so as to assume the curved shape of the ring as seen in FIGURE 5. Carrier 158 continues to position the mold ring 164 within the heating chamber for a momentary dwell period so that the glass sags a sufficient extent without oversagging, this period of time depending upon the particular configuration to which the glass is to be bent. After this dwell within the furnace, normally for one to ten seconds, the carrier 158 moves from the furnace heating chamber 50 shown in FIGURE 8b to the quench unit 24 shown in FIGURE 8a and positions the bent sheet of glass between lower and upper blastheads 172 and 174 of the quench unit. Each of these blastheads is preferably of the type disclosed in United States Patent 3,936,291, the entire disclosure of which is hereby incorporated by reference.

A blower 176 shown in FIGURES 3 and 9 supplies a duct 178 with air that acts as a cooling fluid. Branch ducts 180 and 182 from duct 178 respectively feed the lower and upper blastheads 172 and 174 so that the air is sprayed from the blastheads through nozzles thereof onto the opposite surfaces of the bent glass carried by the mold ring 164. This air supply rapidly cools the glass surfaces to temper the glass and thereby increases its mechanical strength as well as causing the glass to break into small dull pieces. Carrier 158 preferably oscillates back and forth between the blastheads to uniformly distribute the impingement of cooling air with the glass. A control in the form of a cylinder 184 is then supplied pressurized fluid to extend its piston connecting rod 186 and to move the damper 188 of duct 182 from the solid line position to the phantom line position shown in FIGURE 3. This damper movement closes the branch 182 to the air flow from the blower 176 and diverts the air supply from the upper blasthead 172 through the duct 180. Air thus supplied through the lower blasthead 172 impinges with the lower surface of the bent and tempered glass sheet and lifts this glass sheet upwardly off of the mold ring 164 into suspended engagement with suitable bumpers 190 (FIGURE 9) on upper blasthead 174 so that the mold ring carrier 158 shown in FIGURE 10 can move toward the right back into the furnace ready to pick up another piece of glass for another cycle. Subsequently, the carrier 160 also moves to the right to position its delivery ring 168 below the suspended sheet of glass engaged with the upper blasthead.

When the delivery ring 168 shown in FIGURE 10 is positioned below the upper blasthead 174 against which the bent and tempered sheet of glass is suspended, the cylinder 184 of FIGURE 3 is supplied a pressurized fluid to retract its rod 186 and pivot the damper 188 from its phantom line closed position to its solid line open position. Air from the blower 176 is then again supplied to the upper blasthead 174 as well as to the lower blasthead 172 so that the lifted sheet of glass drops down onto the delivery ring. Prior to the next sheet of glass being moved from the furnace to the quench unit by the carrier 158 shown in FIGURE 10, the carrier 160 moves the delivery ring to the left side of the apparatus as viewed in FIGURE 8a where a waiting operator can pick the glass off of the ring. Delivery ring 168 thus functions as a delivery conveyor for the tempered glass. Suitable after-cooling blastheads may follow the quench blastheads and thereafter cool the glass to room temperature before conveyance to the operator.

As seen in FIGURE 10, actuators for moving the carriers 158 and 160 are embodied as continuous drive chains 192 and 194, respectively. Drive chains 192 are located at the opposite sides of the quench unit and secured by connectors 196 to the carrier 158. Chain sprockets 198 and 200 have the chains 192 trained over them with the sprockets 198 interconnected by a hollow cross-shaft sleeve 202 that couples the chains 192 for operation with each other. Likewise, chains 194 are secured to the carrier 160 by connectors 204 and are trained over sprockets 206 and 208 which are respectively aligned with the sprockets 198 and 200. A cross shaft 209 extends through sleeve 202 and interconnects the sprockets 206 with each other. Drive chains 210 and 211 shown in FIGURE 10 drive respective sprockets 212 and 213 from digital drives such as the electric stepper motors 214 and 215 in order to move the carriers 158 and 160 by the actuator chains 192 and 194 independently of each other. Stepper motor 214 provides rapid movement of the carrier 160 on which the mold ring 164 is thereby moved from the furnace into the quench unit without significant heat loss. Accurate control of the acceleration and deceleration involved is also possible with the stepper motor drive of the carrier ring to prevent the glass from being marred by sliding on the ring as it starts and stops.

The manner in which the vacuum holder picks up the heated glass from the conveyor and maintains the glass planar prior to dropping the glass onto the mold ring for bending under gravity gives great production flexibility for bending and tempering glass of different sizes and shapes. Any size and shape of glass can be bent and tempered on the apparatus without changing the vacuum holder due to the planar shape of its surface 94. Only the shape and size of the mold ring 164 (FIGURES 4—6) must be changed in order to accommodate for bending and tempering of different size and shape glass sheets. Also, locating the quench unit 24 laterally with respect to the direction of glass conveyance through the furnace 22 from its end 26 to end 28 (see the solid line position of the quench unit in FIGURE 2) allows the glass to also pass straight out the furnace end 28 through a door opening 216 (FIGURE 9) where a quench unit for tempering planar sheet glass can be located. As previously mentioned, another quench unit can also be located on the opposite side of the furnace end 28 shown in FIGURE 2 from the quench unit 24 so that glass sheets can be received from the furnace and transferred to the quench units on both sides of the furnace for tempering after first being bent in order to increase production output.

Planar surface 94 of the vacuum holder may have its center slightly raised with respect to its periphery, i.e. about one quarter of an inch higher on a surface of a 4 foot dimension so that the surface is not completely planar although it is generally planar. Such a slightly concave downward but generally planar surface reversely bends the glass prior to the bending on the ring to prevent overbending under the force of gravity.

With reference to FIGURE 12, a control panel 216 of the glass bending and tempering apparatus 20 is coupled to a lateral locator 218 by electrical or hydraulic lines 220 and 220a and b. Locator 218 includes a pair of cylinders 222a and 222b which have associated piston connecting rods 224a and 224b that extend into the housing of furnace 22 through the side slots from which the conveyor rolls 68 project outwardly to be driven by the continuous drive loops 74. As the sheets of glass G are conveyed from the right to the left over the conveyor rolls, a first photoelectric sensor 225 coupled to panel 216 by a line 225' senses the glass to thereby actuate locator cylinders 222a and b so as to extend their piston connecting rods 224a and b. Engagement of the rods with the sheets of glass G properly locates the glass at the correct lateral location on the rolls with respect to the vacuum holder in the proper angular orientation. Any improper angularity or lateral positioning of the sheets of glass G on the rolls is thus corrected by this locator 218. A second photoelectric sensor 226 positioned within the furnace 22 and coupled to control panel 216 by a line 228 senses the leading edge of the located glass sheet G as it is conveyed toward the left past the locator 218. It will be noted that the glass sheets G are triangular in shape as shown, being designed as control vent windows for vehicles. Two sensors are necessary since the location of the leading glass edge can change as the glass slides along the rolls during operation of the locator 218. The exact position of the sheet glass with respect to the vacuum holder 92 is known at all times since the electric motor 88 of drive mechanism 86 is coupled by a line 230 to a counter 231 of the control panel 216 as is the sensor 226 by line 228. Control lines 232 and 234 connect the vacuum holder cylinder actuator 140 and the auxiliary lifter cylinder actuators 152, respectively, to the control panel 216 and counter 231 thereof so that operation of these components is coupled with the sensing of the glass position by counting each motor revolution. Glass can thus be picked up off of the conveyor without first stopping its movement while always properly locating the glass longitudinally along the direction of conveyance with respect to the mold ring 164 that has a corresponding triangular shape with a required curvature for bending of the glass. The chain actuators 192 and 194 for moving the mold and delivery rings 164 and 168 are also coupled by lines 236 and 238 to the control panel 216 in order to coordinate the movement of the sheet glass to the quench unit 24 from the furnace 22 and from the quench unit to the operator.

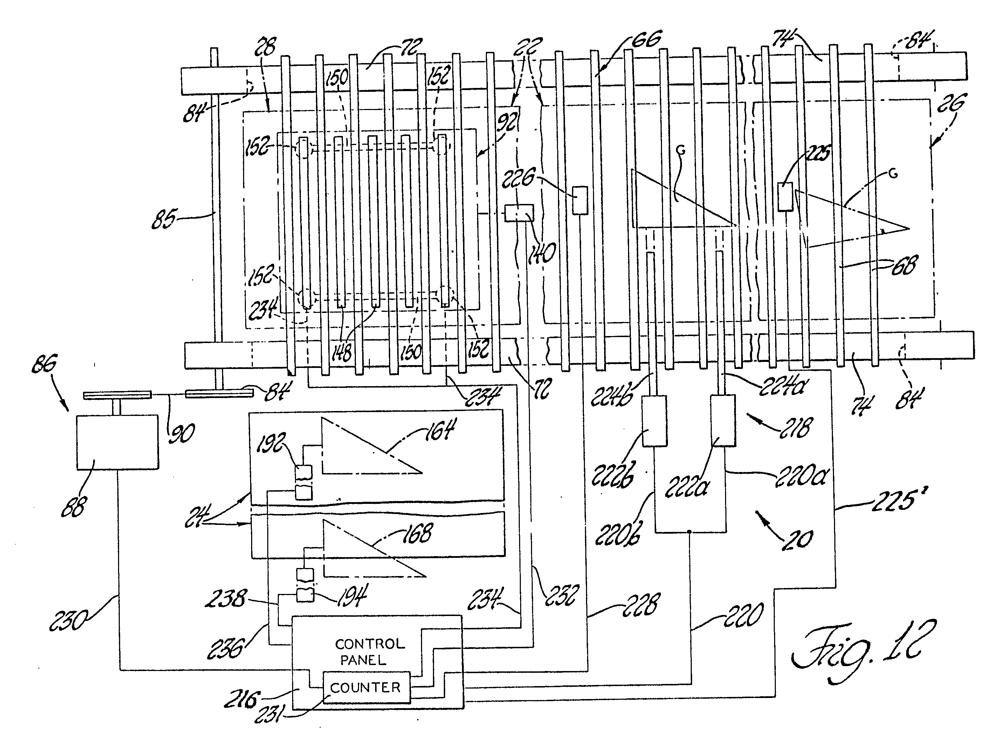

FIGURE 13 is a schematic view similar to a portion of FIGURE 12 of another embodiment of the apparatus. Mold ring 164 is moved by its stepper motor driven chain actuator 192 from the furnace end 28 to and through the quench unit 24 in this embodiment. There is no transfer of the glass to another delivery ring by diverting air flow to the lower blasthead from the upper blasthead as with the previous embodiment of FIGURES 1—12. After removal of the glass from ring 164 by the operator, the ring is driven back to the furnace ready to begin another cycle.

With both embodiments of the apparatus, the mold ring 164 is preferably reciprocated by its carrier drive within the quench unit 24 to distribute the flow of air sprayed onto the glass. This distribution provides uniformity to the tempering of the glass.

A modified version of the apparatus is shown in FIGURE 14 and indicated by 20'. Except as will be noted, many of the components of this modified apparatus are the same as the previously described apparatus and as such bear like reference numerals. However, the locator 218 is located adjacent the vacuum holder 92 rather than upstream from the single sensor 226. The longitudinal position of the sheet of glass G is sensed by sensor 226 to control operation of the vacuum holder 92. After cylinders 152 raise the bars 150 and the auxiliary lifters 148, the sheet of glass G supported on the auxiliary lifters is engaged by extension of the rods 224a and b of the locator cylinders 222a and b and slid along the auxiliary lifters to the proper angular orientation and lateral position. Vacuum subsequently supplied to the holder 92 in the same manner previously described then engages the sheet of glass with its downwardly facing lower surface so that the auxiliary lifters can subsequently be lowered prior to the mold ring moving under the vacuum holder. Control panel 216 and its counter 231 coupled to the electric motor 88, the vacuum holder cylinders 140 and 152, the locator 218, and the sensor 226 provide sequenced operation of the apparatus.

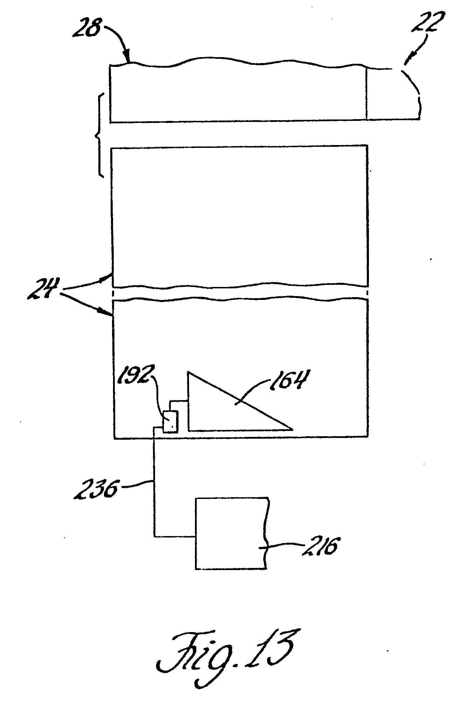

Auxiliary lifters 148 each have the T shape shown in FIGURE 15 and include an upper crossbar 236 and a lower stem 238 that projects downwardly from the crossbar. This T shape provides a rigid auxiliary lifter that can be positioned between the conveyor rolls 68, even when the rolls are closely spaced, and nevertheless function as required. Crossbar 236 can have a width greater than the spacing between the rolls 68 and still be located below the upper sides of the rolls in the lower position so that the glass G can be conveyed on the rolls prior to being picked up as shown by the phantom line indicated position. A cover 240 of woven ceramic cloth, i.e. fiber glass cloth, over the upper side of the crossbar 236 is secured by clips 242 and engages the glass G as it is picked up and slid along the auxiliary lifter by the locator 218 previously described in connection with FIGURE 14. Two L-shaped steel members 244 are secured to each other in a suitable manner such as by welding or rivets to provide the T shape of the lifter 148. Of course, it is also possible to utilize a unitary member of a T shape to provide the auxiliary lifter. Likewise, it is possible for the cover 240 to have a tubular shape through which the auxiliary lifter stems rather than providing the securement clips 242.

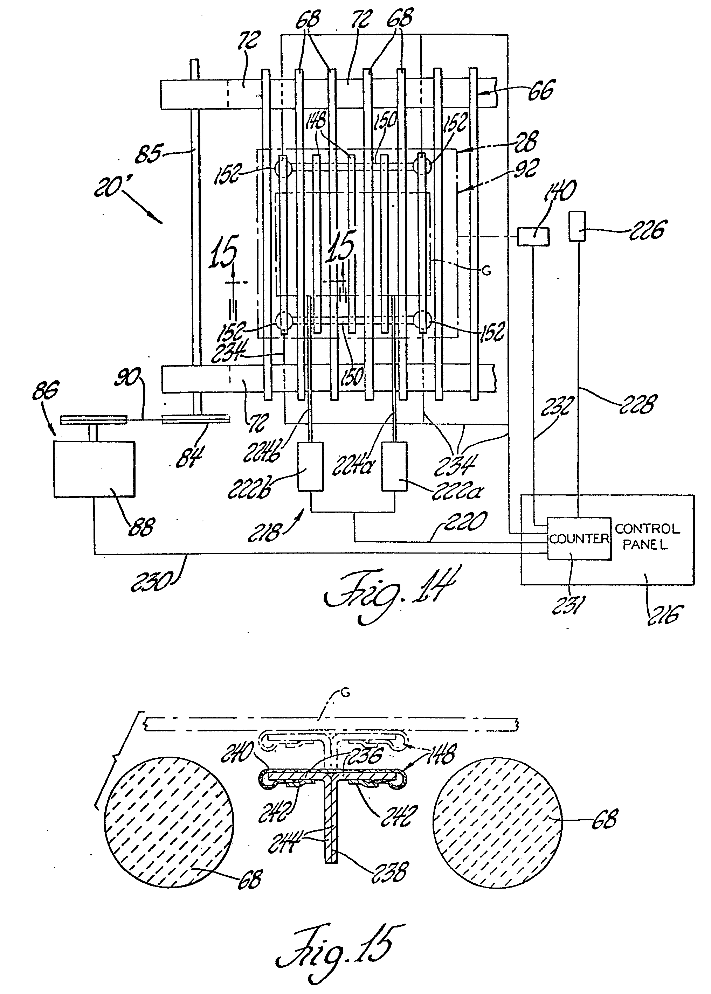

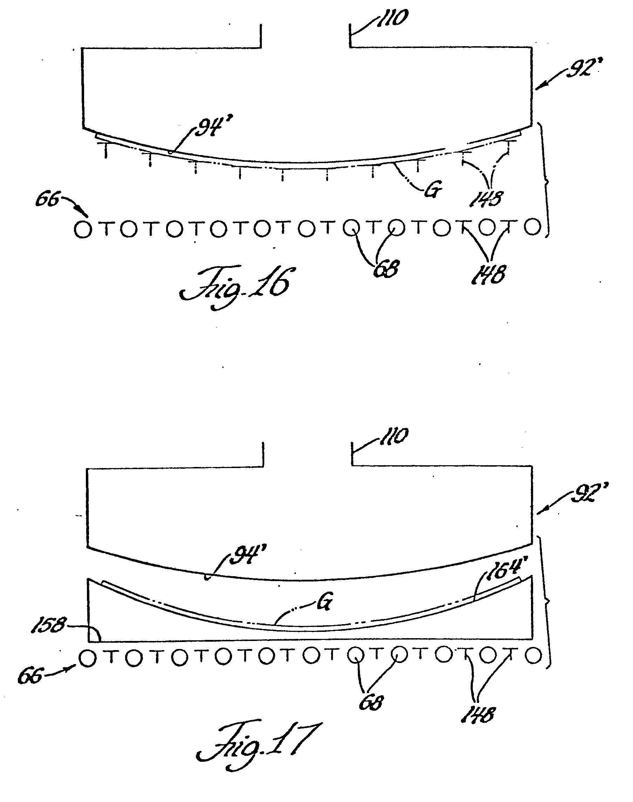

With reference to FIGURES 16 and 17, a modified embodiment 92' of the vacuum holder is shown as having a downwardly facing surface 94' which is of a curved shape. A heated sheet of glass is conveyed under the vacuum holder 92' by the conveyor 66 and then lifted upwardly by the auxiliary lifters 148 which move from the solid line position of FIGURE 16 to the phantom line position thereof to engage the sheet of glass G as shown against the curved surface 94'. Ends of the auxiliary lifters 148 are supported by a suitable power-operated actuator which is capable of lifting auxiliary lifters at the left and right extremes a greater distance than the ones in the center to conform the sheet of glass with the downwardly convexed shape of the curved surface on the vacuum holder. A vacuum drawn within the holder 92' then supports the sheet of glass against the surface 94' and the auxiliary lifters 148 are moved downwardly. Carrier 158 then moves the mold ring 164' beneath the holder 92' and the vacuum being drawn is terminated so that the sheet of glass G drops onto the mold ring. It will be noted that the mold ring 164' has a greater curvature than the vacuum holder surface 94'. Further bending of the sheet of glass G thus takes place on the mold ring 164' under the bias of gravity. Carrier 158 then moves the mold ring 164' from below the vacuum holder 92' out of the furnace heating chamber and into the quench unit in the same manner previously described.

Relatively deep bends can be made by the prebending on the holder surface and the subsequent gravity bending on the ring as described in connection with FIGURES 16 and 17.

While the best mode for practicing the invention has herein been described in detail, those skilled in this art will recognize various alternative designs and embodiments for practicing the present invention as defined by the following claims.

## Claims

1. Apparatus for bending and cooling glass sheets including a heating chamber (50) for providing a heated ambient for heating glass sheets to a sufficiently high temperature to permit tempering thereof; a conveyor (66) for conveying glass sheets generally horizontally through the heating chamber; a holder (92) within the heated ambient and positioned at an elevation above the conveyor and having a downwardly facing surface (94) of a predetermined shape at which a differential gas pressure is applied to a heated sheet of glass received from the conveyor so as to support the glass sheet at an elevation above the conveyor in preparation for bending; a cooling unit (24) located outside the heated ambient for cooling bent glass sheets; a mold (164) with a curved shape for receiving a heated glass sheet from the holder at a position thereunder; and an actuator (192, 194) for moving the mold between the holder and the cooling unit, the invention being characterized in that the mold comprises a ring (164) having an open center, that the ring (164) has at least a substantial portion with a downwardly extending curvature greater than the predetermined shape of the holder surface (94), that the holder receives the heated glass sheet at tempering temperature and thereafter releases the glass sheet for substantial bending on the ring solely due to inertial and gravitational forces, that the cooling unit comprises a quench unit (24) for rapidly cooling glass to provide tempering thereof, and that the actuator (192, 194) moves the ring (164) from the holder (92) to the quench unit (24) for tempering after the glass sheet sags to substantially its final shape within the heated ambient.

2. Apparatus as in Claim 1 wherein the holder is located above the conveyor within the heating chamber that provides the heated ambient and wherein the holder surface includes spaced openings (106, 108) at which a vacuum is drawn in order to apply the differential pressure to a heated glass sheet supported by the holder.

3. Apparatus as in Claim 2 wherein the holder has a porous construction at the surface thereof so as to prevent marring or scratching of heated sheets of glass upon engagement thereof with the holder and so as to also distribute the vacuum between the spaced openings.

4. Apparatus as in Claim 3 wherein the holder includes a cover (104) made of ceramic fibers and having the porous construction which prevents marring or scratching of the heated glass sheets and which also distributes the vacuum between the spaced openings.

5. Apparatus as in Claim 2 further including a support (130) for raising and lowering the vacuum holder relative to the conveyor so as to facilitate lifting of the heated glass sheets off the conveyor in preparation for the bending.

6. Apparatus as in Claim 2 wherein the conveyor includes horizontally extending rolls (68) and auxiliary lifters (148) movable vertically between the rolls to raise a heated sheet of glass toward the vacuum holder and thereby facilitate lifting of the glass sheet in preparation for the bending.

7. Apparatus as in Claim 6 wherein the auxiliary lifters have T shapes including upper crossbars (236) that engage the glass and lower stems (238) that extend downwardly from the crossbars between the conveyor rolls.

8. Apparatus as in Claim 2 wherein the vacuum holder includes a control (114) so as to initially draw a greater vacuum within the openings and to subsequently reduce the vacuum to support the sheet of glass without deforming the sheet at the openings.

9. Apparatus as in Claim 2 which includes a lower blasthead (172) for blowing gas upwardly to lift the bent sheet upwardly off the ring in order to permit movement of the ring from below the lifted sheet back into the heating chamber.

10. Apparatus as in Claim 1 wherein the surface (94) of the holder has a planar shape so as to be capable of supporting a glass sheet of a selected size that is to bend to any desired shape on the ring.

11. Apparatus as in Claim 1 wherein the surface (94') of the holder has a curved shape so as to allow prebending of the glass sheet on the holder prior to the bending on the ring.

## Revendications

1. Appareil pour courber et tremper des feuilles de verre, comprenant une chambre de chauffage (50) destinée à produire l'ambiance de chauffage des feuilles de verre à une température suffisamment élevée pour qu'on puisse les tremper, un convoyeur (66) destiné à transporter les feuilles de verre généralement horizontalement dans la chambre de chauffage, un élément porteur (92) placé dans l'ambiance de chauffage à une certaine hauteur au-dessus du convoyeur et présentant une surface (94) de forme prédéterminée tournée vers le bas, au niveau de laquelle une différence de pression de gaz est appliquée à une feuille de verre chauffée amenée par le convoyeur, de manière à supporter cette feuille de verre à une certaine hauteur au-dessus du convoyeur, en préparation à la courbure, un bloc de refroidissement (24) placé à l'extérieur de la chambre de chauffage pour refroidir les feuilles de verre courbées, un moule (164) de forme courbe destiné à recevoir une feuille de verre chauffée provenant de l'élément porteur, dans une position située au-dessous de ce dernier, et un organe de manoeuvre (192, 194) destiné à déplacer le moule entre l'élément porteur et le bloc de refroidissement, appareil caractérisé en ce que le moule est constitué par un anneau (164) à centre ouvert, en ce que l'anneau (164) présente au moins une partie importante à courbure tournée vers le bas plus importante que la courbure prédéterminée de la surface (94) de l'élément porteur, en ce que l'élément porteur reçoit la feuille de verre chauffée à la température de trempe et lui laisse prendre ensuite une courbure importante sur l'anneau, sous la seule action des forces de pesanteur et d'inertie, en ce que le bloc de refroidissement comporte un bloc de trempe (24) destiné à refroidir rapidement le verre pour le tremper, et en ce que l'organe de manoeuvre (192, 194) fait passer l'anneau (164) de l'élément porteur (92) au bloc de trempe (24) pour effectuer la trempe après que la feuille de verre se soit incurvée à sa forme finale dans la chambre de chauffage.

2. Appareil selon la revendication 1, caractérisé en ce que l'élément porteur est placé au-dessus du convoyeur dans la chambre de chauffage fournissant l'ambiance de chauffage, et en ce que la surface de cet élément porteur présente des ouvertures espacées (106, 108) permettant de faire le vide pour appliquer la différence de pression voulue à une feuille de verre supportée par l'élément porteur.

3. Appareil selon la revendication 2, caractérisé en ce que l'élément porteur présente une structure poreuse à sa surface, de manière à éviter de marquer ou de rayer les feuilles de verre chauffées venant en contact avec celui-ci, et de manière, également, à répartir l'aspiration entre les ouvertures espacées.

4. Appareil selon la revendication 3, caractérisé en ce que l'élément porteur comporte un capot (104) en fibres de céramique présentant une structure poreuse empêchant de marquer ou de rayer les feuilles de verre chauffées et servant également à répartir l'aspiration entre les ouvertures espacées.

5. Appareil selon la revendication 2, caractérisé en ce qu'il comprend en outre, un support (130) permettant de faire monter et descendre l'élément porteur à vide par rapport au convoyeur, de manière à faciliter le levage des feuilles de verre chauffées hors du convoyeur, en préparation à la courbure.

6. Appareil selon la revendication 2, caractérisé en ce que le convoyeur comporte des rouleaux horizontaux (68) et des éléments de levage (148) mobiles verticalement entre les rouleaux pour faire monter une feuille de verre chauffée vers l'élément porteur à vide et faciliter ainsi le levage de la feuille de verre en préparation à la courbure.

7. Appareil selon la revendication 6, caractérisé en ce que les éléments de levage auxiliaires présentant des formes en T comprenant des barres transversales supérieures (236) venant en contact avec le verre et des tiges inférieures (238) partant, vers le bas, des barres transversales, pour passer entre les rouleaux de convoyeur.

8. Appareil selon la revendication 2, caractérisé en ce que l'élément porteur à vide comporte une commande (114) destinée à pomper initialement un vide plus important à l'intérieur des ouvertures et à réduire ensuite ce vide pour supporter la feuille de verre sans la déformer à l'endroit des ouvertures.

9. Appareil selon la revendication 2, caractérisé en ce qu'il comprend une tête de soufflerie inférieure (172) destinée à souffler du gaz vers le haut pour soulever la feuille courbée vers le haut en l'écartant de l'anneau pour que cet anneau puisse quitter sa position sous la feuille de verre soulevée et revenir dans la chambre de chauffage.

10. Appareil selon la revendication 1, caractérisé en ce que la surface (94) de l'élément porteur présente une forme plane de manière à pouvoir supporter une feuille de verre de taille déterminée, destinée à être courbée à n'importe quelle forme voulue sur l'anneau.

11. Appareil selon la revendication 1, caractérisé en ce que la surface (94') de l'élément porteur présente une forme courbe de manière à permettre une précourbure de la feuille de verre sur cet élément porteur, avant d'être courbée sur l'anneau.

**Patantansprüche**

1. Einrichtung für das Biegen und Kühlen von Glasplatten, mit einer eine Heizzone für das Aufheizen der Glasplatten auf eine ein Tempern ermöglichende Temperatur bildenden Heizkammer (50), mit einer Fördervorrichtung (66) für das im wesentlichen horizontal durch die Heizkammer erfolgende Fördern der Glasplatten, mit einem Halter (92), der innerhalb der Heizzone und oberhalb der Fördervorrichtung angeordnet ist und eine abwärts gerichtete ebene Oberfläche (94) vorbestimmter Form aufweist, mittels der eine über die Fördervorrichtung zugeführte aufgeheizte Glasplatte unter Zuführung eines Differentialgasdruckes zwecks Vorbereitung des Biegens über die Fördereinrichtung anhebbar ist, mit einer außerhalb der Heizzone befindlichen Kühleinheit (24) für das Kühlen der gebogenen Glasplatten, mit einer eine gekrümmte Ausbildung aufweisende Biegeform (164) zwecks Aufnahme einer aufgeheizten Glasplatte in eine Position unterhalb des Halters, und mit einer Betätigungsvorrichtung (192, 194) für das Bewegen der Biegeform zwischen Halter und Kühleinheit, dadurch gekennzeichnet, daß die Biegeform einen Ring (164) mit einem offenen Zentrum umfasst, daß der Ring zumindest in einem wesentlichen Teil eine abwärts gerichtete Krümmung aufweist, die größer als die vorbestimmte Form der Oberfläche (94) des Halters ist, daß dem Halter die Glasplatte auf die Biegetemperatur aufgeheizt zuführbar ist und sich von diesem für das Biegen auf dem Ring allein durch Inertial- und Gravitationskräfte löst, daß die Kühleinrichtung für das Tempern der Glasplatte durch schnelles Abkühlen eine Abschreckeinheit (24) aufweist, und daß der Ring (164) durch die Betätigungsvorrichtung (192, 194) vom Halter (92) zur Abschreckeinheit (24) bewegbar ist, um die in der Heizzone in die endgültige Form durchgebogene Glasplatte zu tempern.

2. Einrichtung nach Anspruch 1, dadurch gekennzeichnet, daß der Halter (92) overhalb der Fördervorrichtung (66) und innerhalb der die Heizzone bildenden Heizkammer (50) angeordnet ist, und daß in der Oberfläche (94) des Halters (92) im Abstand voneinander angeordnete, Vakuum zuführende Öffnungen (106, 108) vorgesehen sind, zwecks Bildung des eine Glasplatte am Halter haltenden Differentialdruckes.

3. Einrichtung nach Anspruch 2, dadurch gekennzeichnet, daß die haltende Oberfläche (94) eine ein Beschädigen oder Zerkratzen der aufgeheizten Glasplatte im haltenden Zustand vermeidende, gleichzeitig als Verteiler für das Vakuum zwischen den Öffnungen (106, 108) dienende poröse Ausbildung aufweist.

4. Einrichtung nach Anspruch 3, dadurch gekennzeichnet, daß der Halter (92) eine ein Beschädigen und/oder Zerkratzen der aufgeheizten Glasplatte verhindernde und der Verteilung des Vakuums zwischen den Öffnungen (106, 108) der haltenen Oberfläche (94) dienende Abdeckung (104) aus keramischen Fasern in poröser Ausbildung aufweist.

5. Einrichtung nach Anspruch 2, gekennzeichnet durch einen Support (130) für den das Heben und das Senken des das Heben der aufgeheizten Glasplatten von der Fördervorrichtung zwecks Vorbereitung zum Biegen ermöglichenden Vakuumhalter relativ zur Fördervorrichtung.

6. Einrichtung nach Anspruch 2, dadurch gekennzeichnet, daß die Fördervorrichtung (66) waagerecht sich erstreckende Rollen (68) und senkrecht zwischen den Rollen bewegbare Hilfsheber (178) umfasst, um die geheizten Glasplatten zwecks Vorbereitung des Biegens gegen den Vakuumhalter zu bewegen.

7. Einrichtung nach Anspruch 6, dadurch gekennzeichnet, daß der Hilfsheber (178) T-förmig ausgebildet ist mit einem oberen an der Glasplatte zur Anlage gelangende Querstück (236) und einem unteren Steg (238), der sich vom Querstück aus nach unten zwischen die Rollen (68) erstreckt.

8. Einrichtung nach Anspruch 2, dadurch gekennzeichnet, daß dem Vakuum-Halter eine das Vakuum von einem anfänglichen hohen auf einen niedrigen Wert reduzierende Steuereinrichtung (114) zugeordnet ist, um während des Transports einer Glasplatte diese im Bereich der Öffnungen (106, 108) der haltenden Oberfläche nicht zu deformieren.

9. Einrichtung nach Anspruch 2, dadurch gekennzeichnet, daß ein Gas aufwärts ausblasender, eine gebogene Glasplatte vom Ring anhebender Gebläsekopf (172) vorgesehen ist, derart, daß der Ring (164) aus der Stellung unterhalb der Glasplatte in die Heizkammer schwenkbar ist.

10. Einrichtung nach Anspruch 1, dadurch gekennzeichnet, daß der Halter (92) eine ebene Oberfläche (94) aufweist zwecks Transport einer Glasplatte vorbestimmter Größe zum Biegen beliebiger Form auf dem Ring (164).

11. Einrichtung nach Anspruch 1, dadurch gekennzeichnet, daß der Halter (92) eine gekrümmte Oberfläche (94') aufweist derart, daß ein Vorbiegen der auf dem Ring zu biegenden Glasplatte erzielbar ist.

Fig.1

Fig.2

Fig.3

Fig.5

Fig.4

Fig.7

Fig.6

0 003 391

Fig. 8a

2

*Fig.8b*

Fig. 9

Fig. 10

*Fig. 11*

0 003 391

Fig. 12

*Fig. 13*

Fig. 14

Fig. 15

*Fig. 16*

*Fig. 17*